## Europäisches Patentamt
## European Patent Office
## Office européen des brevets

(19)

(11) Numéro de publication : **0 036 348**
**B1**

# FASCICULE DE BREVET EUROPÉEN

(12)

(45) Date de publication du fascicule du brevet :
**22.01.86**

(21) Numéro de dépôt : **81400314.1**

(22) Date de dépôt : **27.02.81**

(51) Int. Cl.⁴ : **G 01 S 7/52, G 01 S 15/89**

(54) Système de détection active au moyen d'émissions multiples simultanées.

(30) Priorité : **18.03.80 FR 8006043**

(43) Date de publication de la demande :
**23.09.81 Bulletin 81/38**

(45) Mention de la délivrance du brevet :
**22.01.86 Bulletin 86/04**

(84) Etats contractants désignés :
**BE DE GB IT NL SE**

(56) Documents cités :
**EP-A- 0 002 642**
**EP-A- 0 006 197**
**EP-A- 0 007 864**
**DE-A- 2 745 510**
**US-A- 4 107 685**
**US-A- 4 212 084**
**PROCEEDINGS OF THE IEEE, vol. 67, no. 4, Avril 1979, J.L. SUTTON "Underwater acoustic imaging", pages 554-566**
**ULTRASONICS, vol. 18, no. 1, Janvier 1980, D. ASSENZA et al. "Echographic imaging with dynamically focused insonification", pages 38-42**

(73) Titulaire : **THOMSON-CSF**
**173, Boulevard Haussmann**
**F-75379 Paris Cedex 08 (FR)**

(72) Inventeur : **Tournois, Pierre**
**THOMSON-CSF SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Jouve, 18, rue St-Denis, 75001 Paris, France

## Description

La présente invention a pour objet l'augmentation de la résolution des systèmes de détection actifs à émissions aussi bien électromagnétiques, tel RADAR, qu'acoustiques, tel le SONAR.

Dans ces systèmes destinés soit à la détection des cibles, soit à l'extraction, à l'identification ou à la classification de certains paramètres de cibles éventuelles, soit à l'imagerie, le mode utilisé, et particulièrement pour le SONAR, pour « éclairer » le champ angulaire à observer est celui d'une émission cohérente, unique, couvrant tout le champ angulaire à observer, de durée T et de bande b émise autour d'une fréquence porteuse $f_o$, pendant qu'à la réception, un ensemble de voies angulaires est formé en parallèle pour couvrir ce champ.

La résolution angulaire de ces systèmes est pratiquement celle de l'antenne de réception dont on sait que ses dimensions apportent un facteur limitatif à cette résolution.

Un dispositif d'augmentation de la résolution spatiale de systèmes dans le domaine du SONAR, est décrit dans la demande de brevet français publiée sous le n° 2 412 177, on y trouve une base acoustique linéaire utilisant à l'émission un mode dit interférométrique consistant à émettre simultanément sur deux transducteurs situés aux extrémités deux signaux à la même fréquence.

Le résultat de cette émission est la formation dans l'espace de zones alternativement insonifiées et non insonifiées qui convoluées avec des voies préformées à la réception procurent une directivité améliorée d'un coefficient 2, l'existence de ces zones non insonifiées représentent l'inconvénient du procédé.

On y remédie de deux façons distinctes : soit par une seconde émission en simultanée décalée angulairement par rapport à la précédente, mais alors le temps d'exploration est doublé ; soit par deux émissions distinctes en fréquences et simultanées, l'une ayant les caractéristiques de la première émission ci-dessus, l'autre de l'autre émission, mais alors la bande utile est doublée.

Un autre exemple d'amélioration de la directivité peut être trouvé dans le brevet USA n° 4 119 940-Keating qui utilise également N fréquences à l'émission. Cette invention, qui sépare bien les signaux créés par les différentes fréquences, mais en leur faisant perdre ensuite leur identité liée à leurs différentes fréquences, ne fait pas sur eux de traitement spatio-temporel, n'est ni applicable lors de mouvements relatifs base-objet, ni applicable à des bases non planes.

Un autre exemple de dispositif améliorant de la résolution angulaire décrit dans le brevet DE-A1-2 745 510 utilise également N fréquences à l'émission. C'est un dispositif holographique qui n'est pas capable de traiter les mouvements relatifs base-objet.

Le système suivant l'invention remédie à ces inconvénients. Pour la résolution angulaire, le système proposé est identique à un système formant des voies à la fois à l'émission et à la réception, c'est-à-dire qu'il procure une résolution angulaire double de celle d'un système ne formant des voies qu'à la réception.

Pour la résolution en distance et en « vitesse Doppler », le système proposé est identique à un système actif classique émettant un seul signal de durée T et de bande B à chaque récurrence, c'est-à-dire une résolution en distance de c/B et une résolution en fréquence Doppler de 1/T. c étant la vitesse des ondes.

Pour la cadence d'information, le système proposé est identique à un système émettant un seul signal de durée T et de bande B à chaque récurrence et ne formant des voies fines qu'à la réception.

Par ailleurs, le système possède l'avantage de pouvoir être appliqué à certains matériels existants.

Ces matériels sont ceux dont les sources d'émission sont attaquées par des émetteurs modulaires et dont les formations de voies sont à large bande. L'invention peut alors leur être appliquée : en codant à bas niveau les signaux pilotes des émetteurs, en rajoutant, après la formation de voies de réception existante, un décodage des signaux dans ces voies suivie du recalage temporel des signaux décodés.

L'invention a principalement pour objet un radar ou un sonar comportant une antenne réseau d'émission comprenant une pluralité de M sources susceptibles d'émettre simultanément des ondes modulées par un nombre correspondant des signaux codés, les codes étant différents et séparables, une antenne réseau de réception comprenant une pluralité de N récepteurs, des moyens de traitement des signaux de réception, des moyens d'exploitation des signaux traités, caractérisé par le fait que les moyens de traitement des signaux comportent en cascade de moyens de formation des voies de réception dans 2N directions, des moyens de décodage à la réception des codes et des moyens de formation à la réception de voie d'émission.

D'autres caractéristiques et avantages ressortiront de la description qui va suivre illustrée par les figures qui représentent :

figure 1, le système de détection à émission simultanée suivant l'invention ;
figure 2, le synoptique général pour un sonar à base circulaire ;
figure 3, les schémas de traitement pour un sonar à base circulaire ;
figure 4, le détail des circuits de la figure 3 ;
figure 5, une représentation des codes utilisés à l'émission ;
figure 6, le schéma d'une variante de l'invention ;
figure 7, donne l'allure de signaux pour la variante de la figure 6.

2

On considère un ensemble de P sources dont M sont suceptibles de posséder les fonctions d'émission $E_i$, $(1 < i < M)$ et N les fonctions de réception $F_s$, $(1 < j < N)$. Ces sources échantillonnent convenablement l'espace de façon que l'on puisse former des voies aussi bien à l'émission qu'à la réception.

La répartition de ces sources peut être quelconque pourvu que l'on en connaisse leurs coordonnées. Les plus employées sont cependant les répartitions tri-rectangulaires, sphériques, cylindriques, circulaires, conformes, etc... Quant à la répartition de l'énergie dans l'espace ou directivité D, résultant de la formation de voies, à l'émission et à la réception, elle est exprimée généralement à l'aide de deux paramètres angulaires $D(\theta, \phi)$, $\theta$ dans un plan horizontal, $\phi$ dans un plan vertical.

Ces conditions étant énoncées, l'invention a pour but, l'amélioration de la résolution spatiale du système par la superposition selon sensiblement la même direction $(\theta_m, \phi_n)$ de la fonction de directivité à l'émission — $D_E(\theta, \phi)$ et de la fonction de directivité à la reception $D_H(\theta, \phi)$ avec la condition $D_E(\theta, \phi) = D_H(\theta, \phi)$ quels que soient $\theta$ et $\phi$ le résultat étant par conséquent une directivité globale $D(\theta, \phi)^2$ amélioré d'un facteur de 2.

Il est connu d'améliorer la directivité par superposition de voies formées à l'émission et à la réception. Mais le traitement des signaux selon l'invention, permet de s'affranchir des inconvénients de l'art connu. Le système proposé repose sur la combinaison des fonctions émission et réception.

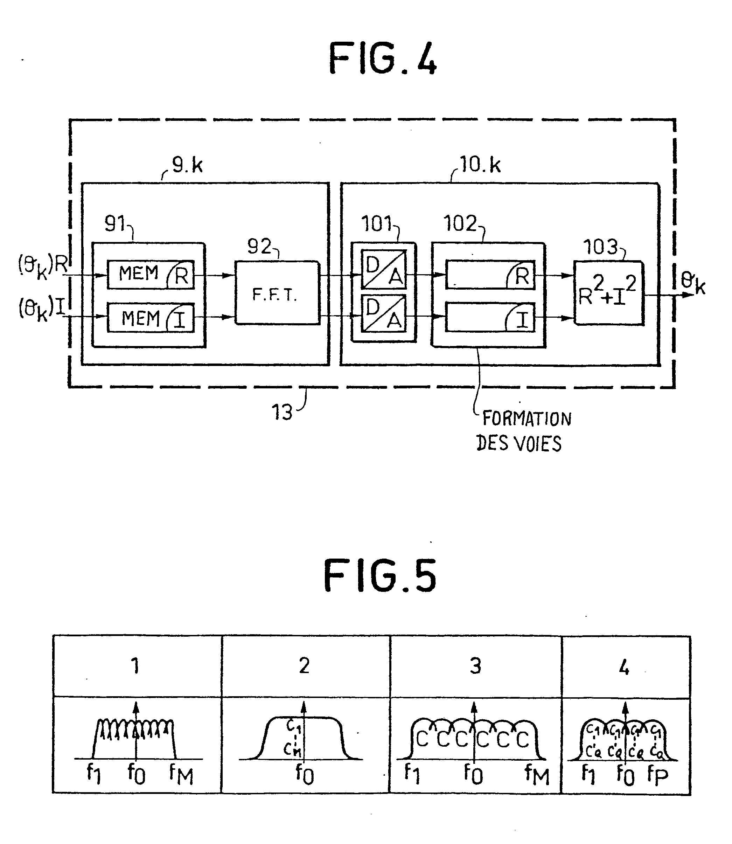

Dans le système suivant l'invention sont émis simultanément M signaux codés $C_1$, ..., $C_i$, ... $C_M$ séparables de bande b et de même durée T, à l'aide de M sources $E_1$, ... $E_i$, ... $E_M$ de coordonnées spatiales connues. Les principaux types d'émissions possibles sont par exemple (fig. 5) :

1. M signaux de fréquence pure $f_1$, ... $f_i$, ... $f_M$ de durée T séparés en fréquence de $1/T = b$

2. M signaux de même fréquence centrale $f_o$ codés dans la même bande b, suivant M codes orthogonaux de durée T avec $bT > M$

3. M signaux codés dans la même bande b suivant un même code de durée T avec $bT > 1$ et de fréquences centrales différentes séparées en fréquence de la distance b

4. M signaux codés dans la même bande b suivant Q codes orthogonaux $(Q < M)$ de durée T avec $bT > Q$ et de P fréquences centrales différentes $(PQ = M)$ séparés en fréquence de la distance b.

En ce qui concerne la réception, elle consiste à recevoir sur N capteurs $H_1$, ... $H_N$, ... les échos provenant des émissions, chaque capteur recevant pendant la récurrence tous les échos provenant des ondes émises par tous les émetteurs $E_1$, à $E_M$, ces signaux étant traités en trois étapes :

1) Formation en temps réel c'est-à-dire en parallèle de toutes les voies de réception $V_k$ de directions $(\theta_m, \phi_n)$ à partir de ces capteurs $H_1$, ... $H_N$, ces voies ayant une certaine directivité $D_H(\theta, \phi)$.

2) Tri par filtrage adapté dans chaque direction $(\theta_m, \phi_n)$, ainsi obtenue, des échos provenant des diverses émissions $E_1$ à $E_M$.

3) Formation de voies directives d'émission selon une directivité $D_E(\theta, \phi)$ sensiblement identique à celle des voies de réception et selon leurs mêmes directions par recalage temporel consistant dans chacune de ces directions $(\theta_m, \phi_n)$ à superposer par des moyens de retards ou de phases appropriés et à sommer en amplitude et en surface pour chaque case distance possible tous les échos ainsi triés.

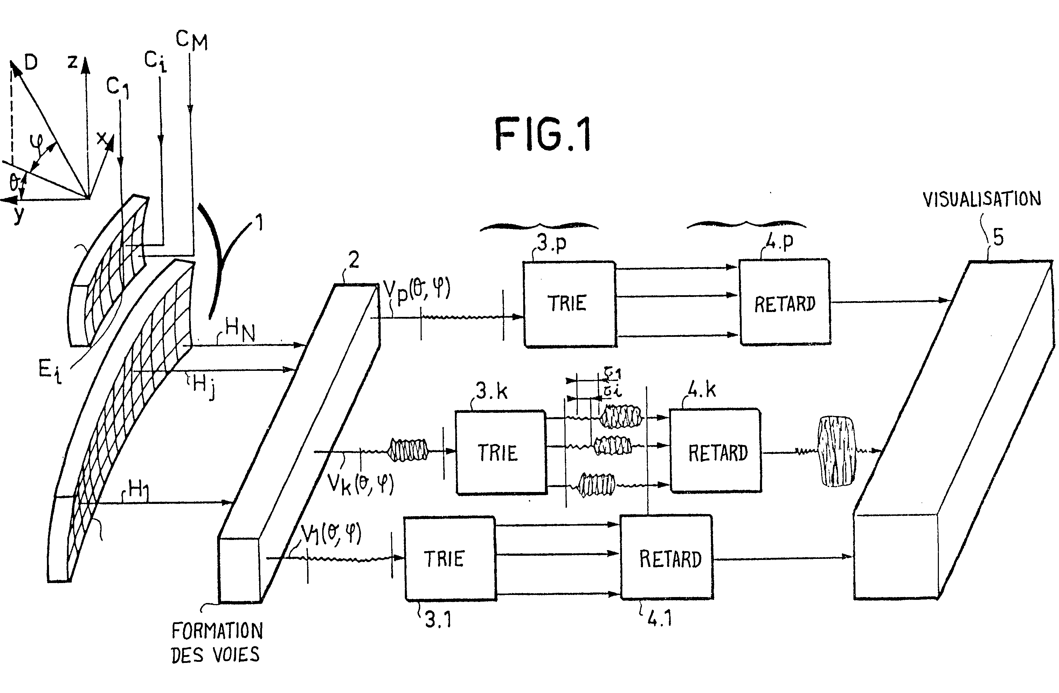

La figure 1 matérialise ces différentes étapes :

1 représente une antenne, par exemple conforme, c'est-à-dire épousant la forme de son porteur (étrave de bateau pour un sonar), composée de M sources d'émission $E_1$ à $E_M$ recevant de M générateurs (non représentés) leurs signaux électriques codés $C_1$ à $C_M$ selon l'un des codages vus plus haut, et de N sources de réception $H_1$ à $H_N$.

Dans les circuits 2 s'effectue la première opération de traitement des signaux consistant à former en parallèle (ou en série si le temps mis pour le faire est inférieur à l'inverse de la bande totale) toutes les voies de réceptions dans les directions $(\theta_m, \phi_n)$ nécessaires au système. Cette formation de voies dans la bande W = B (émission) + D, (où D est la variation maximum de fréquence due à l'effet Doppler) peut être obtenue :

— soit au moyen de dispositifs apportant les retards appropriés dans le cas où la profondeur d de l'antenne, c'est-à-dire le trajet parcouru par les ondes pour atteindre tous les capteurs de l'antenne dans la direction $(\theta, \phi)$, le plus incliné des voies formées est supérieure à c/W ;

— soit au moyen de dispositifs apportant les déphasages appropriés dans le cas où cette profondeur est inférieure à c/W sur chacun des signaux issus des capteurs $H_1$, ... $H_N$, cette opération étant faite un nombre p différent de fois correspondant à p directions $(\theta_m, \phi_n)$ distinctes.

On trouve alors, à la sortie du circuit 2, p voies formées $V_1$, ... $V_k$, ... $V_p$, chacune contenant tous les échos provenant de tous les émetteurs $E_1$ à $E_M$.

Les signaux de chacune des voies, telle que $V_k$ sont appliqués à un circuit tel que 3.k, où s'effectue la deuxième opération de traitement des signaux consistant dans chaque direction de réception $(\theta_m, \phi_m)$ obtenue précédemment, à trier les échos selon les points de l'espace d'émission qui sont à l'origine de leur création. Ceci est rendu possible par le codage des émissions qui personnalisent les émetteurs $E_1$, ... $E_M$. Ce tri s'effectue à l'aide de filtres adaptés aux codes d'émission compte tenu de l'effet Doppler des cibles. Un exemple simple de filtre adapté peut être donné dans le principe du codage 1 donné plus haut (fréquences pures, de durée T, séparés en fréquence de la distance 1/T : l'opération de tri derrière chacune des voies de réception $V_k(\theta, \phi)$ consiste alors en une analyse spectrale de résolution 1/T dans une bande totale W = M × (1/T) + D, D prenant en compte tous les mouvements relatifs possibles des

3

objets à observer. Ce tri des signaux aux différentes fréquences peut être obtenu :

— soit analogiquement par l'emploi de M + DT = R simples filtres passe-bande en parallèle séparés en fréquence de 1/T (informations simultanées) ou par l'emploi de transformateurs de Fourier à lignes à retard dispersives. Ce genre de traitement est décrit dans : « Use of Dispersive Delay line for Signal Processing in Underwater Acoustics ». — P. Tournois and J. Bertheas ; Jasa 1969, pp. 517-531 et Colloque International sur le Radar — C. Lardat, Paris déc. 70, pp. 303-316 ;

— soit numériquement par un traitement tel qu'une transformée de Fourier Rapide (F.F.T. en terminologie anglo-saxonne) de résolution 1/T. Un tel traitement est décrit dans le brevet français n° 2 082 030 et dans l'article « Description et Application de l'Analyseur FFT TSM 4040 » — Revue Technique Thomson-CSF septembre 1973, pp. 595-624 de Delepine (informations temporelles).

On retrouve à la sortie des circuits 3.1, 3.2,-3.p et par voie de réception, R sorties différentes, autant qu'il y a de canaux analysés dans toute la bande (la figure 1 n'en représente que M, c'est-à-dire le cas sans Doppler).

Un autre exemple de filtre adapté peut également être donné dans le deuxième codage où tous les signaux sont émis à la même fréquence centrale mais selon les codes $C_1$, ... $C_i$, ... $C_M$ séparables dits orthogonaux. Le rôle de ce filtre consiste à comparer les différents codes reçus avec le code $C_i$ qu'il a en mémoire. La comparaison fournissant un signal dit de corrélation maximum lorsque le signal reçu contient le code $C_i$ parmi tous les autres, minimum lorsqu'il ne le contient pas.

Ce filtre adapté est un corrélateur. (Un tel traitement décrit dans l'ouvrage « Digital Communications » de S. W. Colomb (Prentice Hall) avec des exemples de codes orthogonaux.)

Dans ce deuxième exemple, le tri des signaux reçus sera donc effectué, derrière chacun des voies de réception par R corrélateurs, autant qu'il y a de codes différents dans la bande totale W = b + D, des signaux reçus.

Le troisième codage correspond à un double codage : selon M fréquences et à l'intérieur de chacune des fréquences.

Le filtre adapté est réalisé par une analyse spectrale suivie d'un filtre unique adapté à l'unique code. Si ce code est par exemple celui d'une émission modulée linéairement en fréquence, le corrélateur sera un filtre à loi de retard adaptée (un tel traitement est décrit dans l'article déjà cité « Use of Dispersive Delay line... »).

Le quatrième codage est un mélange des codages précédents. Son intérêt réside dans la diminution de la bande exigée par exemple par le type du troisième codage. On peut par exemple diviser par deux cette bande en plaçant deux codes orthogonaux sur chacune des fréquences $f_1$ à $f_{M/2}$, modulés linéairement en fréquence l'un selon les fréquences croissantes, l'autre selon les fréquences décroissantes.

Par les circuits 4.1, ... 4.k, ... 4.p s'effectue la troisième opération de traitement des signaux de réception consistant en une reconstruction algébrique des voies d'émission. Cette reconstruction algébrique est obtenue, comme pour la formation des voies de réception vue plus haut, par introduction de retards $Z_1$ ou de phase $\psi_i = \omega_o Z_i$ différents, non plus sur les signaux issus des sources de réception $H_1$, ... $H_N$ mais sur les signaux triés précédemment et correspondant à l'effet du Doppler près, aux sources $E_1$, ... $E_M$ et ceci pour chacune des directions $(\theta_m, \phi_n)$ des voies de réception.

Le traitement dans les circuits 4.1, ... 4.p correspond physiquement à deux effets :

— un effet spatial de « directivité à l'émission » puisque le recalage n'est valable que pour une direction donnée ;

— un effet temporel de « compression d'impulsion » dont l'explication peut être donnée plus facilement si l'on considère les signaux émis selon le premier codage). En effet l'enveloppe de la superposition ou « recalage » et de la somme algébrique de N signaux de fréquences pures distinctes, distantes de 1/T dans une bande B = N/T est rigoureusement identique à un signal bref en sin BT/BT de durée 1/B c'est-à-dire N fois plus courte que le signal d'origine.

Un objet en éloignement ou en rapprochement de vitesse radiale V, décale, en première approximation si V<< c, la fréquence d'émission $f_i$ de la quantité $\pm (2V/c) \times f_i = D$.

D'une façon plus générale, cette translation de fréquence va se traduire par une perturbation sur les codes reçus allant jusqu'à un résultat nul de la convolution avec les filtres adaptés.

Dans le cas du premier codage la translation de fréquence provoque une rotation angulaire apparente des sources d'émission et la direction des voies d'émission formées peut ne plus correspondre avec la direction des voies de réception formées. C'est le problème de la sensibilité à l'effet Doppler.

La solution consiste à adopter un type de code d'émission une géométrie des sources d'émissionréception, une répartition fréquentielle moins sensible à l'effet Doppler et à utiliser un plus grand nombre de filtres adaptés, à la limite un par pas de résolution en Doppler.

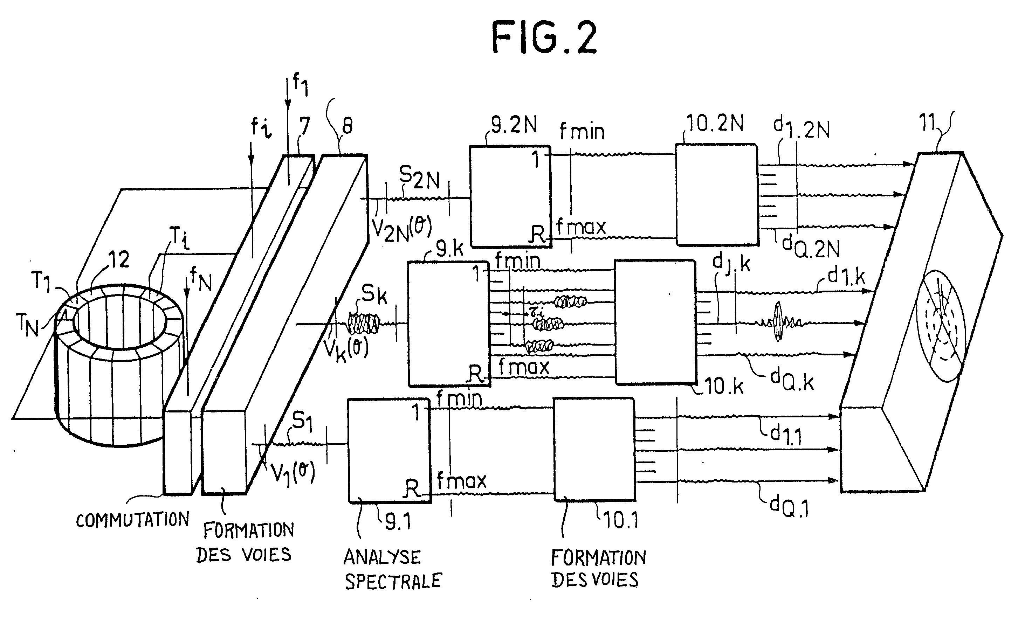

La figure 2 représente le synoptique d'une réalisation particulière de l'invention appliquée à un sonar dit panoramique, car susceptible de scruter tout l'horizon, dont on veut améliorer d'un facteur 2 par rapport à l'art antérieur la directivité des voies formées.

Une base circulaire 12 contient N colonnes de transducteurs telles que $T_i$ sont reliés à des circuits de commutation émission/réception 7. Les signaux reçus sont appliqués aux circuits de formation des voies 8. On y retrouve les éléments de la figure 1 adaptée au cas du premier codage. Chacune de ces voies formées dans le circuit 8 étant analysée en fréquence par les circuits 9.1, ... 9.k, ... 9.2N, les échantillons de

4

fréquence étant ensuite recalés temporellement et superposés dans les circuits de formation de voies d'émission 10.1, ... 10.2N qui fournissent les échantillons Doppler successifs d'une voie (émission + réception) donnée, visualisée par le système d'exploitation en 11.

On a représenté sur la figure 2, la forme des signaux obtenus à la sortie des circuits 8, 9.1, ..., 9.2N, ..., 10.1, ... 10.2N.

A la sortie du circuit de formation de voies 8, on obtient $S_1$, ..., $S_k$, ..., $S_{2N}$ qui sont les signaux des voies formées $V_1(\theta)$, ..., $V_k(\theta)$, ..., $V_{2N}(\theta)$. On a supposé que la cible se trouvait dans la direction correspondant à la voie $V_k(\theta)$, les autres signaux ne représentent que du bruit.

A la sortie du circuit d'analyse spectrale 10.k on trouve R canaux d'analyse fréquentielle, dont seulement M contiennent un signal utile, les autres R-M représentent également du bruit. Ces M signaux utiles sont décalés temporellement selon la géométrie de la base 12 des temps tels que $\tau_i$.

A la sortie du circuit 10.k de formation de voies d'émission, les M signaux utiles précédents sont recalés temporellement pour compenser ces retards tels que $\tau_i$ dans la direction de voie $V_k(\theta)$.

Par suite de la nature de codage en fréquence, la durée des signaux obtenue dans une des voies Doppler $d_{j.k}$ à la sortie du circuit 10.k est comprimée dans le rapport BT et son amplitude est augmentée dans le rapport $\sqrt{BT}$. La voie Doppler $d_{j.k}$ correspond à la vitesse de la cible détectée dans la voie $V_k(\theta)$.

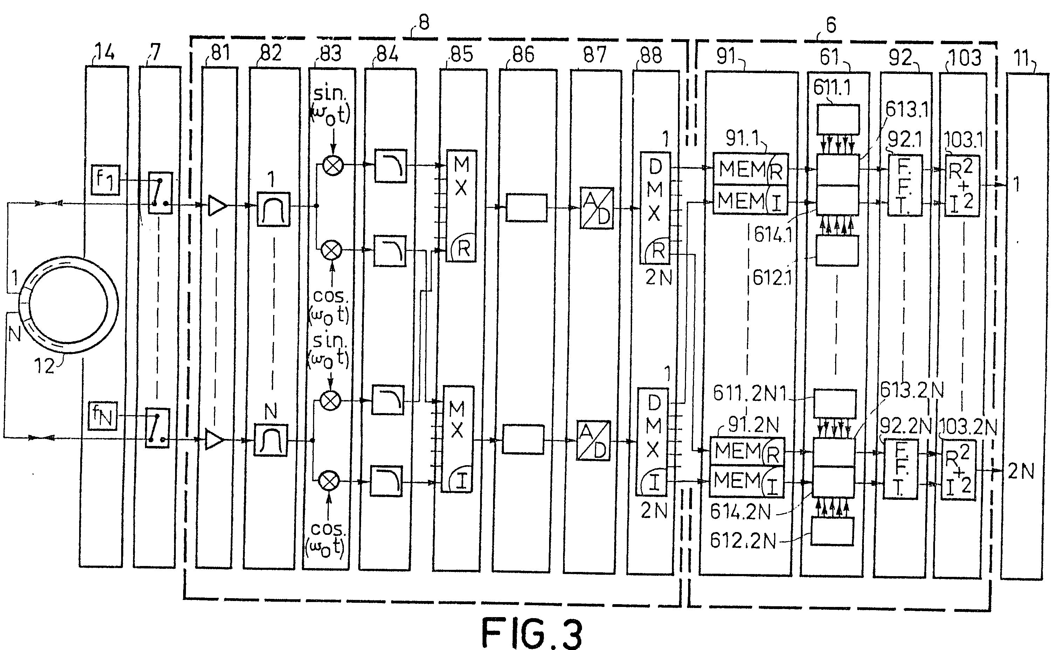

La figure 3 représente le synoptique détaillé de la réalisation préférée pour le montage de la figure 2. La base acoustique cylindrique 12 est composée de N colonnes identiques. Les colonnes émettent (fonctions $E_1$, ... $E_i$ ... $E_N$) et reçoivent (fonctions $H_1$, ... $H_i$, ... $H_N$) alternativement.

Toutes les émissions sont simultanées de durée T, de bande b = 1/T, les fréquences pures $f_1$, ... $f_i$, ... $f_N$ générées par les générateurs 14 étant appliquées respectivement aux colonnes. Il s'agit donc du mode d'émission par le premier codage.

Les commutateurs 7 aiguillent les signaux d'émission vers les colonnes respectives et les signaux de réception $H_1$, ... $H_i$, ... $H_N$ vers les chaînes de réception, une par colonne, constituées par des circuits 81, 82, 83 et 84. Le circuit 81 représente un préamplificateur-régulateur de niveau. Le circuit 82 est un filtre passe-bande de largeur : B + D, le circuit 83 représente un changeur de fréquence destiné à ramener la fréquence centrale $f_o = (f_1 + f_2)/2$ autour de la fréquence zéro c'est-à-dire à transférer le spectre de réception en bande dite « de base », où l'on transmet séparément les parties réelle et imaginaire du signal. Ces deux composantes déphasées de $\pi/2$ sont nécessaires pour garder à la fois les informations d'amplitude et de phase des signaux reçus. Cette opération, non obligatoire dès la formation des voies de réception dans le circuit 86 est réalisée en vue du produit complexe.

Un filtre passe-bas 84 filtre les produits d'inter-modulation obtenus au-delà de la bande B + D/2. Le circuit échantillonneur-multiplexeur 85 travaille à la fréquence d'horloge $F_E = 1,25$ (B + D) supérieur à la fréquence fixée par le théorème de Shannon. A la sortie de 85 les échantillons des signaux transposés des colonnes successives sont introduits dans le dispositif à transfert de charges (D.T.C.) 86, de formation des voies de réception par interpolation. Le principe employé dans ce dispositif est décrit dans le brevet français publié sous le n° 2 432 176. Seule la disposition respective des cellules mémoires est différente par rapport à la description contenue dans le brevet pour tenir compte du fait que la fréquence d'échantillonnage sous-échantillonne spatialement l'onde acoustique vis-à-vis de la profondeur de l'antenne. La formation de voies à bande étroite, est donc en réalité une formation de voies en phase, la phase correcte étant obtenue par interpolation sur 8 échantillons successifs d'une même colonne.

L'interpolation permet également de former 2N voies, c'est-à-dire d'en former deux fois plus que le nombre de colonnes. Cette fonction est également décrite dans le brevet cité. Etant donné l'augmentation de résolution angulaire apportée par la présente invention, le nombre de voies N suivant l'art antérieur est ici doublé, c'est-à-dire qu'il passe à 2N.

On trouve alors à la sortie des dispositifs 86 les échantillons analogiques successifs des voies formées correspondant aux directions $\theta_1$, ..., $\theta_k$, ... $\theta_{2N}$ aux tours successifs d'exploration de l'horizon.

Le circuit 87 est un convertisseur analogique-numérique où les échantillons analogiques précédents sont convertis en échantillons numériques sur 8 bits. Le circuit un démultiplexeur 88 a pour rôle de remettre en parallèle les signaux des 2N voies formées précédemment en série. L'ensemble 91 est une mémoire numérique de mémoire à accès aléatoire de type RAM composée de 2N mémoires telles que 91.k où 1 < k < 2N destinées à conserver pendant une durée T' = T + d/c, des échantillons successifs d'une même voie $\theta_k$, d/c, d étant la profondeur d'antenne déjà définie. Chaque mémoire 91.k est double, $(91.k)_R$ et $(91.k)_I$ remplies simultanément par les démultiplexeurs 88. Le nombre d'éléments mémoire dans chacune d'elle est $F_E \cdot T'$. Cette durée T' de longueur de signal mise en mémoire permet de réaliser dans le calculateur 92 une transformée de Fourier rapide (F.F.T.) de résolution fréquentielle 1/T. La raison de la présence du circuit multiplieur 61 sera mieux comprise en se rapportant à la fig. 4 qui donne le détail des blocs tels 9.k et 10.k formant l'ensemble 13 de la figure 2, dans lesquels s'effectuent les opérations respectives d'analyse fréquentielle et de recalage temporel des émissions. Le circuit 91 est la mémoire déjà nommée. Le dispositif de transformée de Fourier rapide 92 calcule les échantillons successifs du spectre des fréquences contenues dans la tranche T du signal reçu par la voie de réception $V_k(\theta)$. Ces fréquences successives sont transformées en signaux analogiques dans le convertisseur analogique-numérique 101 et envoyés dans un circuit 102 de formation des voies d'émission par recalage temporel de ces signaux fréquentiels.

Cette formation de voie d'émission peut être effectuée par exemple par un composant à D.T.C.

puisque le recalage dépend, comme pour la formation de voies de réception, de la géométrie de l'antenne. Or, nous avons vu que dans notre réalisation, fonctionnant à bande étroite, la formation de voies était en réalité un simple recalage de phase. Cette formation de voies d'émission dans le domaine fréquentiel est donc une simple convolution fréquentielle entre le spectre $g_k(\omega)$ reçu de la direction $\theta_k$ et le spectre $h_k(\omega)$ conjugué complexe du spectre et de l'ensemble des signaux émis à l'infini dans le milieu et dans la même direction. La relation connue (théorème de Plancherel) permet de passer d'une convolution dans l'espace des fréquences à un produit simple dans l'espace temporel. Si en effet $G_k(t)$ et $H_k(t)$ sont les transformées de Fourier des fonctions respectives $g_k(\omega)$ et $h_k(\omega)$ on a alors $T.F(G_k(t) \cdot H_k(t)) = g_k(\omega) * h_k(\omega)$ relation qui montre que l'opération de convolution effectuée dans le circuit 102 après la transformée de Fourier effectuée par le calculateur 92, peut être remplacée par une simple multiplication temporelle, effectuée terme à terme en amont de cette transformée de Fourier.

Le circuit 61 de la figure 3 est donc composé, pour chaque voie $V_k(\theta)$ de deux mémoires numériques, type à lecture mémoire morte programmable PROM 611.k et 612.k et de circuits multiplieurs 613.k et 614.k. Les mémoires 611.k et 612.k contiennent respectivement la partie réelle et la partie imaginaire de la réponse impulsionnelle du filtre adapté aux différents codes superposés émis dans la direction $\theta_k$. Ce signal temporel mis en mémoire n'est d'ailleurs autre que le signal physique $S(\theta_k,t)$, mais retourné dans le temps, reçu en un point éloigné de la base acoustique 12 dans la direction $\theta_k$ et transposé en bande de base. Il ne dépend donc que :

— du code émis sur chacune des colonnes ;

— de la géométrie des colonnes par rapport à la direction $\theta_k$, géométrie qui a introduit les divers déphasages dans cette direction ;

— éventuellement, une fenêtre de pondération de la fonction mémorisée.

Le nombre de cellules des mémoires 611.k et 612.k est la même que celui des mémoires 91. Les $T.F_E$ échantillons des mémoires 91 sont sortis et multipliés terme à terme par les $T.F_E$ échantillons des mémoires 611.k et 612.k dans les multiplicateurs des parties réelles et imaginaires 613.k et 614.k.

Dans les calculateurs 92.k se trouvent les opérateurs de Transformée Rapide de Fourier travaillant sur $T.F_E$ points à la récurrence d'analyse de T/N.

Il a été représenté sur la figure 3 autant de calculateurs F.F.T que de voies de réception. La vitesse de calcul de ces opérateurs permet cependant d'affecter séquentiellement à un seul opérateur le travail de calcul de plusieurs voies de réception, quatre par exemple.

Les échantillons obtenus à la sortie des calculateurs 92 représentent les parties réelle et imaginaire de l'analyse fréquentielle des signaux d'une voie donnée après sa double formation. Ce sont donc les canaux Doppler en série obtenus au pas fréquentiel de 1/T. Leur nombre est D.T.

Dans le circuit de calcul 103 est effectué le calcul du carré des modules des parties réelles R et imaginaires I de ces échantillons fréquentiels Doppler.

Le dispositif d'exploitation par visualisation reçoit les 2N voies de réception/émission avec les informations dans chaque voie, de la distance et de la vitesse des cibles.

La visualisation utilise un tube couleur présentant l'image ($\theta$, distance) en mode B. L'information Doppler est appliquée au signal de chrominance.

Dans une réalisation préférée on a les caractéristiques suivantes :

| | |
|---|---|
| Diamètre de la base acoustique | $\varnothing$ = 2,5 m |
| Nombre de colonnes | N = 32 |
| Durée d'émission | T = 0,3 s |
| Fréquences | $f_i$ = 3 500-53 Hz |
| Bande d'émission | B = N/T = 106 Hz |
| Bande Doppler à v = 30 m/s | D = + 140 Hz soit 280 Hz |
| Bande totale | W = B + D = 386 Hz |
| Fréquence d'échantillonnage par colonne | $F_E$ = 426 Hz |
| Chemin parcouru par l'onde entre deux échantillonnages | $c/F_E$ = 3,50 m (à comparer à $\varnothing$) |
| Nombre de cellules des mémoires (91.k) | $T.F_E$ = 828 éléments |
| Temps de récurrence de l'analyse FFT | T/N = 9,4 ms |
| Nombre total de calculs FFT/seconde | $2.N^2/T$ = 6 827 FFT/s |
| Nombre d'opérations élémentaires dans un FFT | $(T.F_E/2) = \log_2(TF_E)$ = 448 |
| Nombre total d'opérations élémentaires dans un FFT | = 6 827 × 448 = 3 058.496/s |
| Nombre de circuits calculateurs 92 FFT de cycle 1,3 $\mu$s | = 4 |
| Nombre de canaux Doppler | DT = 84. |

Selon une variante de l'invention les deux opérations réalisées dans les circuits tels que 3.k et 4k respectivement de filtrage adapté aux émissions et de formation des voies d'émission peuvent être remplacées par une seule opération réalisée par un dispositif de convolution du signal reçu dans chacune des voies avec la copie de la somme des signaux émis à l'infini dans la direction correspondant à cette voie, et renversé dans le temps.

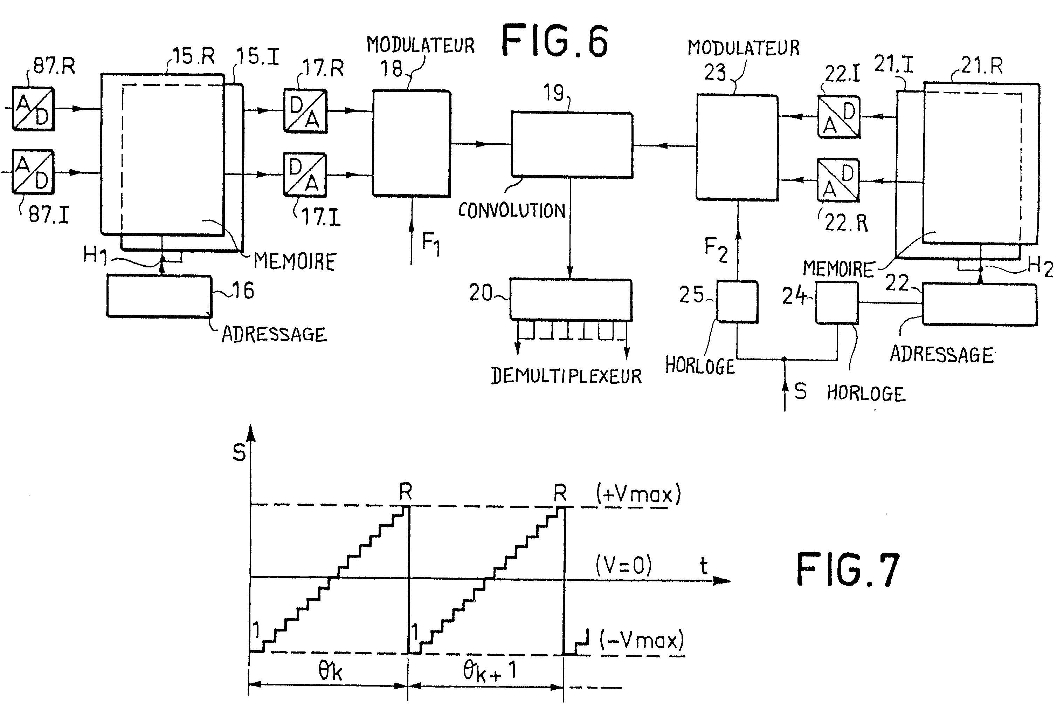

La figure 6 montre le synoptique général de cette variante de l'invention qui remplace l'ensemble du traitement effectué par les circuits 9.1, ... 9.2N et 10.1, ..., 10.2N.

Les mémoires 15.R et 15.I sont des mémoires adressables de type RAM dans lesquelles les signaux réels et imaginaires reçus dans les voies formées sont écrits selon des colonnes et relus selon des lignes, une ligne correspondant à une voie. L'adressage des signaux à l'écriture et à la lecture est effectué par le circuit 16. L'écriture est effectuée à la même fréquence que la fréquence de sortie des échantillons du circuit de formation des voies 86.

La durée du signal mis en mémoire dans chaque ligne est $T' = T + d/c$. La lecture de ces lignes est effectuée à une fréquence $H_1$ plus rapide de telle façon que le signal de durée $T'$ de bande $1/T'$ occupe maintenant une bande $K/T'$.

Les signaux des lignes correspondants aux voies formées subissent une conversion numérique/analogique dans les circuits 17.R et 17.I puis sont mis sur une porteuse $F_1$ par le modulateur complexe 18 qui reçoit les composantes $\mathrm{Sin}(2\pi F_1 \cdot t)$ et $\cos(2\pi F_1 \cdot t)$. Le signal $V_1(t)$ issu de ce modulateur est envoyé sur un dispositif analogique de convolution 19 qui est préférentiellement un dispositif à ondes élastiques tel que décrit dans Proceeding International Seminar on Component Performance and System-Application of SAW Devices de E.C.S. Paige pp. 167-180, 1973 (IEE Publication) ou bien dans Proceedings I.E.E.E. de P. Defranould et C. Maerfeld p. 748, mai 1976.

La fréquence centrale de ce convoluteur est $F_1$ et sa bande est $K/F'$.

Ce convoluteur reçoit par ailleurs la copie de convolution $V_2(t)$ définie plus haut et correspondant à la même direction. Il fournit un signal $C(t)$ qui est démultiplexé par le circuit 20 à la sortie duquel on obtient les diverses voies formées en parallèle, chacune des voies contenant en série les trois échantillons dans chaque canal Doppler. Ces signaux sont exploités par le dispositif de visualisation 11 de la figure 3.

Le signal $V_2(t)$ est obtenu à partir des mémoires 21.R et 21.I qui contiennent sous forme numérique les copies transposées en bande de base, des signaux émis à l'infini et retournés dans le temps. Ces signaux sont rangés en ligne, chaque ligne correspondant à une direction donnée.

Cette mémoire est du type mémoire morte programmable (PROM en terminologie anglo-saxonne).

Ces informations sont lues par lignes, chaque ligne étant lue R fois, R étant le nombre de voies Doppler. L'adressage est effectué par le circuit 22 à la cadence $H_2$.

Les informations lues dans les deux mémoires 21.R et 21.I sont converties en signaux analogiques pour les circuits 22.R et 22.I et mis sur une porteuse à la fréquence $F_2$ par le circuit 23, identique au circuit 18.

La fréquence porteuse $F_2$ et la fréquence d'horloge $H_2$ sont générées respectivement par les générateurs 24 et 25 de type oscillateurs à fréquence contrôlée par tension (VCO en terminologie anglo-saxonne) la forme de cette tension étant représentée figure 7.

Le fonctionnement de l'ensemble du dispositif représenté figure 6 est le suivant : à chaque ligne lue dans les mémoires 15.R et 15.I et introduite dans le convoluteur 19 à la porteuse $F_1$ et la cadence $H_1$ fixes correspond la ligne homologue des mémoires 21.R et 21.I introduite dans le convoluteur 19 à la fréquence porteuse $F_2$ et à la cadence $H_2$ variables, cette fréquence et cette cadence étant changée R fois. Dans chaque mémoire les lignes homologues sont donc lues R fois la première à fréquence et cadence fixes, la seconde à fréquence et cadence variables.

L'amplitude de variation de cette fréquence et de cette cadence autour de $F_2$ et $H_2$ sont respectivement :

$$\Delta F_2 = K.f_o \cdot (4vmax/c)$$

$$\Delta H_2 = H_1 \times (4Vmax/c)$$

Cette variation étant obtenue par R sauts égaux et Vmax représentant la vitesse maxima de la cible. Préférentiellement, on prend $Kf_o = F_1$.

Les variations $\Delta F_2$ et $\Delta H_2$ au cours des lectures successives d'une même ligne produisent des copies des signaux d'émission affectés d'un effet Doppler. Il s'en résultera donc un signal dans la voie Doppler correspondant à la vitesse de la cible.

On a décrit ainsi des systèmes de détection permettant avec une antenne de dimensions données, de çagner sur la résolution angulaire.

Bien entendu cette description n'a été donnée à titre indicatif pour le SONAR. La présente invention s'applique à un RADAR dont l'antenne tournante aura été remplacée par une antenne dite « réseau », comportant des sources fixes ainsi que des moyens de déflection du faisceau radar.

Dans ce cas, ce système permet non plus de gagner sur la résolution angulaire, mais sur la cadence d'information comme le nombre de voies formées.

**Revendications**

1. Radar ou sonar comportant une antenne réseau d'émission comprenant une pluralité de M sources ($E_1$, ..., $E_M$) susceptibles d'émettre simultanément des ondes modulées par un nombre correspondant des signaux codés ($C_1$, ..., $C_M$), les codes étant différents et séparables, une antenne réseau de réception comprenant une pluralité de N récepteurs ($H_1$, ..., $H_N$), des moyens de traitement des signaux de réception, et des moyens d'exploitation des signaux traités, caractérisé par le fait que les moyens de traitement des signaux comportent en cascade de moyens (2) de formation des voies de réception dans 2N directions ($\theta_1$, ..., $\theta_{2N}$), des moyens (3.1, 3.2, ..., 3.p) de décodage à la réception des codes ($C_1$, ..., $C_M$) et des moyens (4.1, 4.2, ..., 4.p) de formation à la réception de voie d'émission.

2. Radar ou sonar selon la revendication 1, caractérisé par le fait qu'il comporte une antenne réseau (12) unique servant alternativement d'antenne d'émission et d'antenne de réception.

3. Radar ou sonar selon la revendication 1 ou 2, caractérisé par le fait que les voies de réception et les voies d'émission sont formées sensiblement dans les mêmes directions ($\theta_1$, ..., $\theta_{2N}$) avec sensiblement la même répartition de l'énergie dans l'espace.

4. Radar ou sonar suivant la revendication 1, 2 ou 3, caractérisé par le fait que les moyens (4.1, 4.2, ..., 4.p) de formation d'émission effectuent un recalage temporel des signaux décalés en fonction des directions ($\theta_1$, ..., $\theta_{2N}$) et de la géométrie des sources d'émission.

5. Radar ou sonar selon l'une quelconque des revendications précédentes, caractérisé par le fait que les M sources ($E_1$, ..., $E_M$) émettent simultanément des ondes de fréquences pures ($f_1$, ..., $f_M$), pendant une période T dans une bande b telle que bT = 1, séparée en fréquence de 1/T, les moyens (3.1, ..., 3.p) réalisant une analyse spectrale.

6. Radar ou sonar selon l'une quelconque des revendications 1 à 4, caractérisé par le fait que les M sources $E_1$, ..., $E_M$ émettent simultanément les ondes de même fréquence centrale, codés selon M codes séparables de durée T et de bande b telle que bT < M, les moyens de décodage (3.1, 3.2, ..., 3.p) réalisent la convolution entre les signaux d'une voie et les M copies des codes émis.

7. Radar ou sonar selon l'une quelconque des revendications 1 à 4, caractérisé par le fait que les M sources ($E_1$, ..., $E_M$) émettent simultanément des ondes de fréquence centrales $f_1$, ..., $f_u$, codées selon un même code, de durée T et de bande b, telles que bT < 1, séparées en fréquence de b, les moyens de décodage (3.1, ..., 3.p) réalisent une analyse spectrale suivie d'une convolution avec la copie du code unique émis.

8. Radar ou sonar selon l'une quelconque des revendications 1 à 4, caractérisé par le fait que les M sources ($E_1$, ..., $E_M$) émettent simultanément des ondes de P fréquences $f_1$, ..., $f_p$ (P < M), chaque fréquence est codée par un même jeu de Q codes séparables (PQ = M) de durée T et de bande b tels que bT < Q, les moyens de décodage (3.1, ..., 3.p) réalisent une analyse spectrale suivie d'une convolution avec les Q copies des codes émis.

9. Radar ou sonar selon l'une quelconque des revendications précédentes, caractérisé par le fait que les moyens de recalage temporels suivent les moyens de décodage des signaux reçus.

10. Radar ou sonar selon l'une quelconque des revendications précédentes, caractérisé par le fait que la projection selon un axe d'émission de la distance maximale entre deux transducteurs de l'antenne (12) est inférieure à C/W, C étant la vitesse de propagation des ondes et W est égale à la bande de fréquence à la réception tenant compte de l'effet Doppler, les moyens de formation de voie d'émission (4.1, ..., 4.B) précédant les moyens (3.1, ..., 3.p) de décodage des signaux reçus.

11. Radar ou sonar selon l'une quelconque des revendications précédentes, caractérisé par le fait que dans les moyens de formation des voies d'émission sont constitués, dans chaque voie de réception formée,

— par une mémoire renformant un signal complexe d'émission, de durée T' = T + d/c et renversé dans le temps, identique à celui reçu par le milieu de propagation dans la direction de la voie de réception formée ;

— par des multiplicateurs, multipliant terme à terme une tranche de durée T' du signal reçu dans la voie de réception formée au signal de la mémoire précédente.

12. Radar ou sonar selon les revendications 1 à 10, caractérisé par le fait que les signaux fournis par les différentes voies subissent une démodulation complexe, les composantes réelles et imaginaires étant mises en mémoire (15.R, 15.I) une ligne correspondant à une voie de réception, ces lignes étant lues R fois à la cadence $H_1$ mises sur une fréquence porteuse $F_1$ formant le signal $V_1(t)$ à un dispositif de convolution (19) qui reçoit par ailleurs des copies $V_2(t)$ des signaux émis dans la direction correspondant venant d'une seconde mémoire (21.R et 21.I), les lignes étant lues R fois à des fréquences croissantes ($F_2$) et une cadence $H_2$ croissante, et mis sur une fréquence porteuse $F_2$ croissante pendant les R lectures de cette seconde mémoire, les signaux de convolution C(t) après démultiplexage (24) étant appliqués au dispositif de visualisation (11).

**Claims**

1. A radar or sonar device including a transmission antenna network having a plurality of M sources ($E_1$, ..., $E_M$) capable of simultaneously transmitting waves which are modulated by a corresponding number of the encoded signals ($C_1$, ..., $C_M$), the codes being different and separable, further including a reception antenna network having a plurality of N receivers ($H_1$, ..., $H_n$), means for processing the reception signals and means for evaluating the processed signals, characterized in that the means for processing the signals comprise a cascade arrangement of means (2) for constituting the reception channels according to 2N directions ($\theta_1$, ..., $\theta_{2N}$), of decoder means (3.1, 3.2, ..., 3.p) at the reception of

the codes ($C_1$, ..., $C_M$) and of means (4.1, 4.2, ..., 4.p) for constituting a transmission channel at the reception.

2. A radar or sonar device according to claim 1, characterized in that it comprises a unique antenna network (12) used alternately as transmission antenna and as reception antenna.

3. A radar or sonar device according to claim 1 or 2, characterized in that the reception channels and the transmission channels are constituted substantially along the same directions ($\theta_1$, ..., $\theta_{2N}$) with substantially the same spatial energy distribution.

4. A radar or sonar device according to claim 1, 2 or 3, characterized in that the means (4.1, 4.2, ..., 4.p) for constituting the emission channel submit the delayed signals to a time re-adjustment according to the directions ($\theta_1$, ..., $\theta_{2N}$) and the geometry of the transmission sources.

5. A radar or sonar device according to any one of the preceding claims, characterized in that the M sources ($E_1$, ..., $E_M$) transmit simultaneously waves of pure frequencies ($f_1$, ..., $f_M$) during a period T in a band b, such that $b.T = 1$, separated by a frequency of $1/T$, the means (3.1, ..., 3.p) realizing a spectrum analysis.

6. A radar or sonar device according to any one of claims 1 to 4, characterized in that the M sources ($E_1$, ..., $E_M$) transmit simultaneously the waves of identical central frequency encoded according to M separable codes of duration T and of a band b, such that $bT < M$, the decoding means (3.1, 3.2, ..., 3.p) realizing the convolution between the signals of one channel and the M copies of the transmitted codes.

7. A radar or sonar device according to any one of the claims 1 to 4, characterized in that the M sources ($E_1$, ..., $E_M$) transmit simultaneously waves of central frequencies $f_1$, ..., $f_u$, encoded according to the same code, of a duration T and of a band b, such that $bT < 1$, separated by a frequency of b, the decoding means (3.1, ..., 3.p) performing a spectrum analysis followed by a convolution with the copy of the unique transmitted code.

8. A radar or sonar device according to any one of claims 1 to 4, characterized in that the M sources ($E_1$, ..., $E_M$) transmit simultaneously waves of P frequencies $f_1$, ..., $f_P$ ($P < M$), each frequency being encoded by the same set of Q separable codes ($PQ = M$) of a duration T and a band b, such that $bT < Q$, the decoding means (3.1, ..., 3.p) realizing a spectrum analysis followed by a convolution with the Q copies of the transmitted codes.

9. A radar or sonar device according to any one of the preceding claims, characterized in that the means for the time readjustment are disposed following the means for decoding the received signals.

10. A radar or sonar device according to any one of the preceding claims, characterized in that the projection of the maximum distance between two transducers of the antenna (12) along a transmission axis is smaller than C/W, C being the propagation speed of the waves and W being equal to the frequency band at the reception, under consideration of the Doppler effect, the means for constituting a transmission channel (4.1, ..., 4.B) preceding the means (3.1, ..., 3.p) for decoding the received signals.

11. A radar or sonar device according to any one of the preceding claims, characterized in that the means for constituting the transmission channels are composed in each constituted reception channel
— by a memory storing a complex transmission signals of the duration $T' = T + d/c$ and time-inversed, this signal being identical to that received by the propagation medium along the direction of the constituted reception channel ;
— by multipliers which multiply member after member a portion of a duration $T'$ of the signal received in the constituted reception channel, with the signal of the preceding memory.

12. A radar or sonar device according to claims 1 to 10, characterized in that the signals delivered by the different channels are submitted to a complex demodulation, the real and imaginary components being stored in a memory (15.R, 15.I), one line corresponding to one reception channel, these lines being read R times at the rate $H_1$, transposed on a carrier frequency $F_1$ and constituting the signal $V_1(t)$ for a convolution device (19) which further receives copies $V_2(t)$ of the signals transmitted along the corresponding direction and delivered by a second memory (21.R and 21.I), the lines being read R times at increasing frequencies ($F_2$) and at an increasing rate $H_2$, and transposed onto an increasing carrier frequency $F_2$ during the R reading operations of that second memory, the convolution signals C(t) being applied after demultiplexing (24) to a display device (11).

## Patentansprüche

1. Radar- oder Sonargerät mit einem Sendeantennennetz, das M Quellen ($E_1$, ..., $E_M$) besitzt, die gleichzeitig mit einer entsprechenden Anzahl von kodierten Signalen ($C_1$, ..., $C_M$) modulierte Wellen aussenden können, wobei die Kodes unterschiedlich und trennbar sind, und mit einem Empfangsantennennetz, das N Empfänger ($H_1$, ..., $H_N$), Mittel zur Verarbeitung der Empfangssignale und Mittel zur Auswertung der verarbeiteten Signale besitzt, dadurch gekennzeichnet, daß die Mittel zur Signalverarbeitung eine Kaskadenanordnung von Mitteln (2) zur Bildung der Empfangskanäle in 2N Richtungen ($\theta_1$, ..., $\theta_2$), Mittel (3.1, 3.2, ..., 3.p) zur Dekodierung beim Empfang der Kodes ($C_1$, ..., $C_M$) und Mittel (4,1 4.2, ..., 4.p) zur Sendekanalbildung beim Empfang aufweisen.

2. Radar- oder Sonargerät nach Anspruch 1, dadurch gekennzeichnet, daß es ein einziges Sendeantennennetz (12) aufweist, das abwechselnd als Sende- und als Empfangsantenne dient.

3. Radar- oder Sonargerät nach Anspruch 1 oder 2, dadurch gekennzeichnet, daß die Empfangskanäle und die Sendekanäle im wesentlichen für dieselben Richtungen ($\theta_1$, ..., $\theta_{2N}$) mit im wesentlichen derselben räumlichen Energieaufteilung gebildet sind.

4. Radar- oder Sonargerät nach Anspruch 1, 2 oder 3, dadurch gekennzeichnet, daß die Mittel (4.1, 4.2, ..., 4.p) zur Sendekanalbildung eine zeitliche Ausrichtung der abhängig von den Richtungen ($\theta_1$, ...$\theta_{2N}$) und der Geometrie der Sendequellen verzögerten Signale durchführen.

5. Radar- oder Sonargerät nach einem beliebigen der vorhergehenden Ansprüche, dadurch gekennzeichnet, daß die M Quellen ($E_1$, ..., $E_M$) gleichzeitig während einer Periode T Wellen reiner Frequenzen ($f_1$, ...$f_M$) in einem frequenzmäßig um 1/T getrennten Band b aussenden, so daß bT = 1 ist, wobei die Mittel (3.1, ..., 3.p) eine Spektralanalyse durchführen.

6. Radar- oder Sonargerät nach einem beliebigen der Ansprüche 1 bis 4, dadurch gekennzeichnet, daß die M Quellen ($E_1$, ..., $E_M$) gleichzeitig die Wellen gleicher Mittenfrequenz aussenden, die gemäß M trennbaren Kodes einer Dauer T und eines Bands b kodiert sind, derart, daß bT kleiner als M ist, wobei die Dekodiermittel (3.1, 3.2, ..., 3.p) die Konvolution zwischen den Signalen eines Kanals und den M Kopien der ausgesandten Kodes durchfüren.

7. Radar- oder Sonargerät nach einem beliebigen der Ansprüche 1 bis 4, dadurch gekennzeichnet, daß die M Quellen ($E_1$, ..., $E_M$) gleichzeitig Wellen zentraler Frequenzen $f_1$, ..., $f_u$ aussenden, die gemäß einem gemeinsamen Kode kodiert sind, eine Dauer T und ein Band b besitzen, derart, daß b. T. klein gegen 1 ist, und frequenzmäßig um b getrennt sind, wobei die Dekodiermittel (3.1, ..., 3.p) eine Spektralanalyse gefolgt von einer Konvolution mit der Kopie des ausgesandten einzigen Kodes durchführen.

8. Radar- oder Sonargerät nach einem beliebigen der Ansprüche 1 bis 4, dadurch gekennzeichnet, daß die M Quellen ($E_1$, ..., $E_M$) gleichzeitig Wellen von P Frequenzen $f_1$, ..., $f_P$ aussenden (P kleiner M), wobei jede Frequenz mit einem gemeinsamen Satz von U trennbaren Kodes einer Dauer T und eines Bandes b kodiert ist, derart, daß bT kleiner Q ist, wobei die Dekodiermittel (3.1, ..., 3.p) eine Spektralanalyse gefolgt von einer Konvolution mit den Q Kopien der ausgesandten Kodes durchführen.

9. Radar- oder Sonargerät nach einem beliebigen der vorhergehenden Ansprüche, dadurch gekennzeichnet, daß die Mittel zur zeitlichen Ausrichtung auf die Mittel zur Dekodierung der empfangenen Signale folgen.

10. Radar- oder Sonargerät nach einem beliebigen der vorhergehenden Ansprüche, dadurch gekennzeichnet, daß die Projektion des maximalen Abstands zwischen zwei Antennentransduktoren (12) in Richtung einer Sendeachse kleiner als C/W ist, wobei C die Fortpflanzungsgeschwindigkeit der Wellen ist und W gleich dem Empfangsfrequenzband unter Berücksichtigung des Dopplereffekts ist, wobei die Mittel zur Sendekanalbildung (4.1, ..., 4.B) vor den Mitteln (3.1, ..., 3.p) zur Dekodierung der empfangenen Signale liegen.

11. Radar- oder Sonargerät nach einem beliebigen der vorhergehenden Ansprüche, dadurch gekennzeichnet, daß die Mittel zur Bildung der Sendekanäle in jedem gebildeten Empfangskanal aus
— einem Speicher, der ein komplexes Sendesignal einer Dauer T' = T + d/c und in Zeitumkehrung enthält, das dem Signal gleicht, das vom Ausbreitungsmedium in Richtung des gebildeten Empfangskanals empfangen wurde, und aus
— Multiplizieren bestehen, die Term für Term einen Abschnitt einer Dauer T' des empfangenen Signals im gebildeten Empfangskanal mit dem Signal des vorhergehenden Speichers multiplizieren.

12. Radar- oder Sonargerät nach den Ansprüchen 1 bis 10, dadurch gekennzeichnet, daß die von den verschiedenen Kanälen gelieferten Signale einer komplexen Demodulation unterliegen, wobei die reellen und die imaginären Komponenten in Speicher (15.R, 15.I) gebracht werden und eine Zeile einem Empfangskanal entspricht, daß diese Zeilen R mal mit der Kadenz $H_1$ gelesen und auf einen Träger der Frequenz $F_1$ aufmoduliert das Signal $V_1(t)$ für eine Konvolutionsvorrichtung bilden, daß diese Vorrichtung außerdem Kopien $V_2(t)$ der in die entsprechende Richtung ausgesandten Signale empfängt, die von einem zweiten Speicher (21.R, 21.I) stammen, wobei die Zeilen R-mal mit steigender Frequenz ($F_2$) und zunehmender Kadenz $H_2$ gelesen werden und auf einen Träger steigender Frequenz $F_2$ während der R Auslesevorgänge aus diesem zweiten Speicher aufmoduliert werden, und daß die Konvolutionssignale C(t) nach einer Demultiplexierung (24) an die Anzeigevorrichtung (11) angelegt werden.

# FIG.1

VISUALISATION

0 036 348

FORMATION
DES VOIES

# FIG.2

COMMUTATION    FORMATION
               DES VOIES

ANALYSE
SPECTRALE

FORMATION
DES VOIES

0 036 348

FIG.3

# FIG.4

FORMATION
DES VOIES

# FIG.5

| 1 | 2 | 3 | 4 |
|---|---|---|---|

FIG.6

FIG.7

0 036 348